# EUROPÄISCHE PATENTSCHRIFT

(11) **EP 3 371 843 B1**
(45) Veröffentlichungstag und Bekanntmachung des Hinweises auf die Patenterteilung: **26.02.2020**
(21) Anmeldenummer: 16788519.3
(22) Anmeldetag: 28.10.2016
(51) Int. Cl.: H01M 2/10, H01M 10/42, H01M 10/625, H01M 10/655, H01M 10/613, H01M 2/12

(54) **VORRICHTUNG MIT EINEM GEHÄUSE UND EINER BATTERIE**
DEVICE COMPRISING A HOUSING AND A BATTERY
DISPOSITIF COMPRENANT UN BOÎTIER ET UNE BATTERIE

(30) Priorität: 04.11.2015 DE 102015221617
(43) Veröffentlichungstag der Anmeldung: 12.09.2018
(73) Patentinhaber: Robert Bosch GmbH, 70442 Stuttgart (DE)
(72) Erfinder: ELLAM, Mark, Stowmarket Suffolk IP14 1TX (GB); THORNTON, Darren, Mistley Essex CO11 1UD (GB); KOEPF, Christian, Wherstead IP9 2BA (GB)
(86) Internationale Anmeldenummer: PCT/EP2016/076133
(87) Internationale Veröffentlichungsnummer: WO 2017/076778

(56) Entgegenhaltungen:
- EP-A1- 1 840 986
- DE-A1-102010 051 010
- GB-A- 197 183
- JP-A- 2014 049 424
- US-A1- 2009 280 394
- US-A1- 2011 020 676
- US-A1- 2014 356 657

## Beschreibung

Die Erfindung betrifft eine Vorrichtung mit einem Gehäuse und einer Batterie gemäß Patentanspruch 1.

### Stand der Technik

Aus WO 2008/010801 A2 ist ein mobiles Stromversorgungsgerät mit einem Gehäuse bekannt. In dem Gehäuse ist eine Batterie angeordnet. Das Gehäuse weist Räder, einen Stehfuß und einen Handgriff auf, so dass das Gehäuse auf einfache Weise bewegt werden kann. Zudem weist das Gehäuse Stecker auf, über die elektrische Geräte an das Gehäuse angeschlossen werden können.

In der JP 2014 049424 A ist eine Batterieaufbewahrungsvorrichtung beschrieben, die ein Gehäuse und eine Batterie aufweist. In der US 2011/020676 A1 ist eine in einem Batteriegehäuse aufgenommene Batterie beschrieben.

### Offenbarung der Erfindung

Die Aufgabe der Erfindung besteht darin, eine verbesserte Vorrichtung mit einem Gehäuse und einer Batterie bereitzustellen.

Die Aufgabe der Erfindung wird durch das Gehäuse gemäß Patentanspruch 1 gelöst.

Weitere Ausführungsformen der Vorrichtung ergeben sich aus den abhängigen Ansprüchen.

Ein Vorteil der beschriebenen Vorrichtung besteht darin, dass die Batterie gegenüber äußeren Beschädigungen geschützt ist. Dies wird dadurch erreicht, dass die Batterie hängend im Gehäuse befestigt ist. Dabei weist ein Boden der Batterie einen Abstand vom Boden des Gehäuses auf. Zudem weisen Seitenwände der Batterie einen Abstand von den Seitenwänden des Gehäuses auf. Somit ist eine direkte mechanische Verbindung zwischen der Batterie und dem Gehäuse nur durch die Halterung der Batterie gegeben. Fällt die Vorrichtung um oder fällt die Vorrichtung zu Boden, so wird der Aufprall nicht direkt vom Gehäuse auf die Batterie übertragen, sondern nur über die Halterung, die das Gehäuse mit der Batterie verbindet. Die Halterung kann aus einem elastischen Material gebildet sein, das wenigstens eine gewisse Elastizität insbesondere bei hohen Kräften oder Beschleunigungen ermöglicht. Beispielsweise ist die Halterung aus einem Material gebildet, das elastischer bzw. weicher ist als das Material des Gehäuses. Auf diese Weise wird eine Art elastische Halterung der Batterie im Gehäuse realisiert. Zudem kann die Halterung aus einem Material mit einer hohen Festigkeit gebildet sein.

In einer Ausführungsform sind das Gehäuse und/oder die Halterung aus Kunststoff gebildet. Kunststoff weist eine gewisse Elastizität auf, so dass bei einem Aufprall der Vorrichtung z.B. auf den Boden die Aufprallkräfte im Gehäuse wenigstens teilweise elastisch absorbiert werden, bevor die Aufprallkräfte über die Halterung auf die Batterie übertragen werden. Auf diese Weise wird eine Dämpfung und Abfederung der Aufprallkräfte auf die Batterie erreicht. Anstelle von Kunststoff können auch andere Materialien für das Gehäuse und/oder die Halterung verwendet werden, die eine gewisse Elastizität aufweisen.

In einer weiteren Ausführungsform weist die Batterie in einem oberen Endbereich wenigstens auf zwei Seiten der Batterie ein Halteelement als Halterung auf. Die Halteelemente sind an wenigstens zwei Seitenwänden des Gehäuses befestigt. Auf diese Weise wird eine einfache und ausreichend hängende Halterung der Batterie im Gehäuse ermöglicht. Die zwei Seitenwände sind in einer Ausführungsform gegenüberliegende Seitenwände des Gehäuses. Zudem können auch drei Halteelemente vorgesehen sein. Bei einem rechteckförmigen Gehäuse kann es vorteilhaft sein, dass die Batterie über vier Halteelemente mit den vier Seitenwänden des Gehäuses befestigt ist.

In einer weiteren Ausführungsform bilden der Boden des Gehäuses und die vier Seitenwände ein geschlossenes, topfförmiges Gehäuse mit einem offenen oberen Deckelbereich. Die vier Seitenwände weisen einen umlaufenden Deckelrand auf, wobei der Deckelrand den nach offenen Deckelbereich umgibt. Die Halterung der Batterie liegt auf dem Deckelrand des Gehäuses auf. Durch die geschlossene topfförmige Ausbildung des Gehäuses wird ein zuverlässiger mechanischer Schutz für die Batterie bereitgestellt. Zudem wird ein Eindringen von Feuchtigkeit über das Gehäuse in Richtung auf die Batterie vermieden. Weiterhin bilden der umlaufende Deckelrand und die Auflage der Halterung der Batterie auf dem Deckelrand eine einfach herzustellende Ausführungsform, die zudem eine sichere Befestigung der Batterie am Gehäuse ermöglicht. Weiterhin wird durch die gewählte Befestigung der Batterie am Deckelrand des Gehäuses eine möglichst große Länge des Gehäuses in Richtung der Höhe für die hängende Befestigung der Batterie im Gehäuse realisiert. Dadurch steht bei einem Aufprall der Vorrichtung eine möglichst große Höhe des Gehäuses zur Abfederung der Aufprallkräfte zur Verfügung. Dieser Vorteil kommt insbesondere dann zum Tragen, wenn die Vorrichtung mit dem Boden des Gehäuses auf einen Gegenstand oder einen Boden fällt. In dieser Situation können die Aufprallkräfte durch die gesamte Höhe des Gehäuses aufgrund des elastischen Materials des Gehäuses gedämpft werden, bevor die Aufprallkräfte über die Halterung auf die Batterie übertragen werden.

Abhängig von der gewählten Ausführungsform kann die Halterung der Batterie nicht nur im oberen Endbereich des Gehäuses und der der Batterie vorgesehen sein, sondern auch beispielsweise auf Dreiviertel der Höhe des Gehäuses und/oder der Batterie oder in der Mitte der Höhe des Gehäuses und/oder der Batterie ausgebildet sein.

Auf der Batterie ist eine Deckelplatte vorgesehen, die die Oberseite der Batterie abdeckt. Dabei wird beispielsweise eine gesamte Grundfläche der Batterie abgedeckt. Äußere Randbereiche der Deckelplatte ragen wenigstens abschnittsweise seitlich über die Batterie hinaus. Die äußeren Randbereiche bilden einen wenigstens abschnittsweisen Halterand. Der Halterand stellt die Halterung der Batterie dar. Auf diese Weise wird zum einen eine Abdeckung der Oberseite der Batterie erreicht. Zum anderen wird konstruktiv einfach die Ausbildung des Halterandes ermöglicht, wobei der Halterand gleichzeitig die Halterung der Batterie darstellt. Der Halterand ist am Gehäuse der Batterie befestigt. Somit werden auf konstruktiv einfache Weise die Befestigung der Batterie im Gehäuse und die mechanische Abdeckung der Batterie durch die Deckelplatte gelöst.

In einer weiteren Ausführungsform bilden die äußeren Randbereiche einen umlaufenden, geschlossenen Halterand. Der umlaufende, geschlossene Halterand ist mit dem Gehäuse umlaufend verbunden. In einer Ausführung ist der umlaufende Halterand über dem Deckelrand angeordnet. Zwischen dem Deckelrand und dem Halterand kann eine Dichtung vorgesehen sein, die das Gehäuse gegenüber der Deckelplatte abdichtet. Durch die geschlossene Ausbildung des Gehäuses und durch die geschlossene Ausbildung der Deckelplatte wird eine staubdichte und/oder feuchtigkeitsdichte Unterbringung der Batterie im Gehäuse ermöglicht.

In einer weiteren Ausführungsform weist die Deckelplatte wenigstens ein Druckausgleichsventil auf. Mithilfe des Druckausgleichsventils können Druckunterschiede des Gehäuses, die beispielsweise durch ein Ausgasen der Batterie entstehen, ausgeglichen werden.

In einer weiteren Ausführungsform weist die Deckelplatte auf einer Oberseite gegenüberliegend zur Batterie wenigstens ein Kühlelement auf. In einer weiteren Ausführungsform ist die Deckelplatte aus einem thermisch leitenden Material gebildet. Beispielsweise kann die Deckelplatte aus Metall gebildet sein. Auf diese Weise wird eine Kühlung der Batterie verbessert. Durch die Ausbildung des Kühlelementes auf der Oberseite der Deckelplatte wird eine verbesserte Kühlung der Batterie erreicht. Dadurch ist es möglich, das Material des Gehäuses unabhängig von dem Aspekt der thermischen Leitfähigkeit in Bezug auf die mechanische Stabilität und die Aufpralldämpfung auszuwählen.

Das Gehäuse ist mit einem Deckel verschlossen, wobei der Deckel auf den Seitenwänden des Gehäuses aufliegt. Dadurch wird eine Abdeckung der Deckelöffnung des Gehäuses nach oben erreicht. Somit ist auch ein Schutz der Batterie von oben gegeben.

Der Deckel weist einen umlaufenden Deckelrahmen auf, wobei der Deckelrahmen auf den Seitenwänden des Gehäuses aufliegt. Zudem ist der Deckel in zwei Deckelbereiche unterteilt, wobei die zwei Deckelbereiche getrennt voneinander sind. Ein erster Deckelbereich ist zur Aufnahme wenigstens einer elektrischen Komponente vorgesehen. Die elektrische Komponente kann eine Anzeige, ein elektrischer Anschluss, elektrische Schalter, Widerstände oder eine elektrische Schaltung sein. Der zweite Deckelbereich ist zur Aufnahme wenigstens eines Kühlelementes vorgesehen. Auf diese Weise wird eine Trennung und damit eine bessere thermische Isolierung zwischen der Kühlfunktion und der elektrischen Funktion mithilfe des Deckels erreicht.

In einer Ausführungsform weist jeder Deckelbereich eine Ausbuchtung nach oben auf, wobei zwischen den Ausbuchtungen ein Deckelboden vorgesehen ist, wobei der Deckelboden auf annähernd gleicher Höhe wie der Deckelrahmen angeordnet ist. Somit wird eine große Oberfläche im Bereich der Ausbuchtungen des Deckels bereitgestellt. Diese kann insbesondere für eine verbesserte Kühlfunktion der Kühlelemente genutzt werden. Weiterhin sind die elektrischen Komponenten des ersten Deckelbereichs thermisch vom Kühlelement durch die Ausbildung der zwei Ausbuchtungen und einen Luftzwischenraum besser isoliert. Weiterhin kann der Deckelboden zwischen den zwei Ausbuchtungen dazu verwendet werden, um den Deckel zusätzlich zu befestigen. Beispielsweise kann die Befestigung an der Deckelplatte erfolgen.

In einer weiteren Ausführungsform ist der erste Deckelbereich gegenüber dem zweiten Deckelbereich feuchtigkeitsdicht und/oder luftdicht abgedichtet. Weiterhin kann der zweite Deckelbereich wenigstens eine Lüftungsöffnung aufweisen. Somit wird ein trockener erster Bereich für die elektrischen Komponenten im ersten Deckelbereich bereitgestellt. Weiterhin wird für die Kühlfunktion im zweiten Deckelbereich ein offener zweiter Deckelbereich bereitgestellt, so dass eine verbesserte Kühlfunktion erreicht wird.

In einer weiteren Ausführungsform ist im zweiten Deckelbereich ein Lüfter vorgesehen. Durch das Vorsehen des Lüfters wird die Kühlleistung verbessert.

Der erste Deckelbereich weist eine umlaufende Dichtung auf, wobei die Dichtung zwischen der Deckelplatte der Batterie und dem umlaufenden unteren Randbereich des ersten Deckelbereiches angeordnet ist. Somit wird eine einfache und sichere Abdichtung des ersten Deckelbereiches ermöglicht.

In einer weiteren Ausführungsform weist die Batterie auf einer Oberseite und/oder auf einer Seitenfläche eine elektronische Schaltung auf. Die elektronische Schaltung kann beispielsweise eine Ladesteuerung und/oder eine Entladesteuerung und/oder eine Überwachungsschaltung für die Batterie aufweisen. Durch die Anordnung der elektronischen Schaltung direkt auf der Oberseite oder direkt auf der Seitenfläche der Batterie wird ein kompakter Aufbau ermöglicht. Die elektronische Schaltung ist bei Vorsehen der Deckelplatte zwischen der Deckelplatte und der Batterie angeordnet. In einer Ausführungsform ist die Batterie und insbesondere die Batterie zusammen mit der elektronischen Schaltung in einem Batteriegehäuse angeordnet. Das Batteriegehäuse ist über die Halterung in dem Gehäuse der Vorrichtung hängend gehaltert. Somit wird ein weiterer Schutz der Batterie innerhalb des Gehäuses erreicht.

Ein einfacher Aufbau wird insbesondere dadurch erreicht, dass die Deckelplatte einen Teil des Batteriegehäuses darstellt.

Eine Verbesserung der Handhabbarkeit der Vorrichtung wird dadurch erreicht, dass das Gehäuse auf einem Tragrahmen aufsitzt, wobei der Tragrahmen wenigstens ein Bodenelement und wenigstens zwei, insbesondere vier Seitenelemente aufweist. Der Boden des Gehäuses sitzt auf dem Bodenelement auf. Die wenigstens zwei Seitenelemente ragen an zwei gegenüberliegenden Seitenbereichen bis über den Deckelbereich des Gehäuses nach oben hinaus. Die wenigsten zwei Seitenelemente gehen vom Bodenelement aus. In einer weiteren Ausführungsform weist der Tragrahmen wenigstens vier Seitenelemente auf, wobei die vier Seitenelemente in vier Eckbereichen des Gehäuses angeordnet sind. Die vier Seitenelemente ragen vom Bodenelement ausgehend bis über den Deckelbereich des Gehäuses hinaus.

In einer weiteren Ausführungsform weist die Vorrichtung elektrische Anschlüsse zum Anschließen von elektrischen Leitungen an die Batterie auf. Die Vorrichtung ist als mobile Stromversorgung ausgebildet, wobei die Batterie eine wiederaufladbare Batterie darstellt.

Die Erfindung wird im Folgenden anhand der Figuren näher erläutert. Es zeigen
- Fig. 1: eine schematische Darstellung eines Querschnitts durch eine Anordnung mit einem Gehäuse mit einer hängenden Batterie,
- Fig. 2: eine Ansicht von oben auf die Anordnung von Figur 1,
- Fig. 3: eine Ansicht von oben auf eine weitere Ausführungsform eines Gehäuses mit Batterie,
- Fig. 4: eine Ansicht von oben auf einen weitere Ausführungsform eines Gehäuses mit Batterie,
- Fig. 5: einen schematischen Querschnitt durch eine weitere Ausführungsform eines Gehäuses mit einer hängenden Batterie,
- Fig. 6: eine Explosionsdarstellung einer weiteren Ausführung eines Gehäuses mit einer Batterie,
- Fig. 7: einen schematischen Querschnitt durch das Gehäuse mit Batterie der Fig. 6 mit einem Tragrahmen,
- Fig. 8: einen weiteren schematischen Querschnitt durch das Gehäuse und die Batterie mit dem Tragrahmen der Fig. 7,
- Fig. 9: einen Teilausschnitt einer Oberseite einer Deckelplatte,
- Fig. 10: eine vergrößerte Darstellung eines Querschnittes durch einen Randbereich des Gehäuses, des Deckels und der Deckelplatte,
- Fig. 11: eine vergrößerte Darstellung von oben auf einen Randbereiches des Deckels, der Deckelplatte und des Gehäuses,
- Fig. 12: einen vergrößerten Ausschnitt eines Deckelrandbereiches des Gehäuses von unten,
- Fig. 13: eine Ansicht von unten auf den Deckelrandbereich des Gehäuses im Bereich eines Griffes,
- Fig. 14: eine schematische Darstellung der Batterie mit einer elektronischen Schaltung ohne Batteriegehäuse,
- Fig. 15: eine perspektivische Darstellung eines geöffneten Batteriegehäuses, und
- Fig. 16: eine weitere Seitenansicht des Batteriegehäuses, das geöffnet ist.

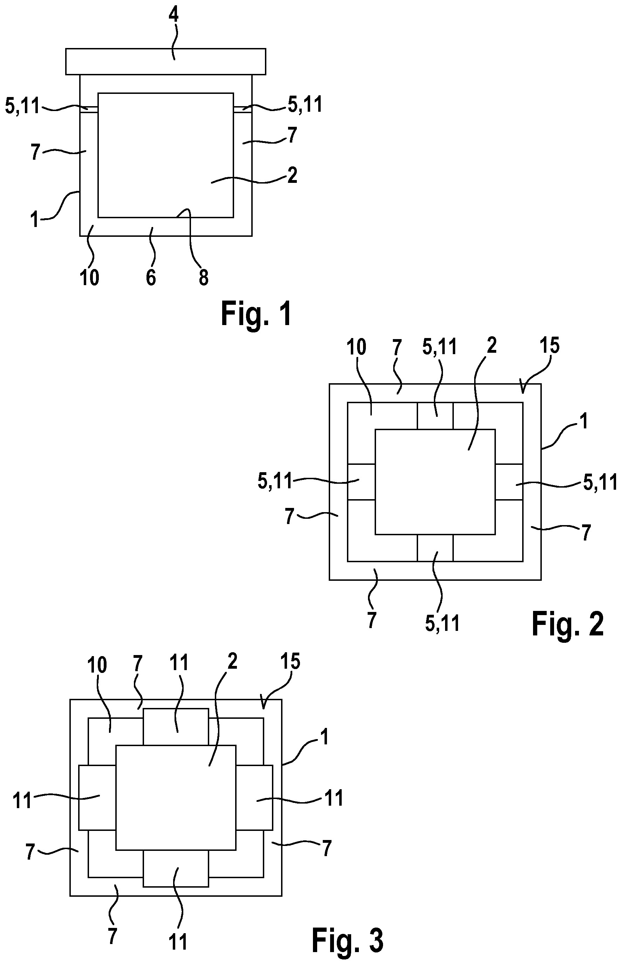

Fig. 1 zeigt in einem schematischen Querschnitt ein Grundprinzip der vorliegenden Vorrichtung. Eine Batterie 2 ist von einem Gehäuse 1 umgeben, wobei die Batterie 2 hängend über eine Halterung 5 im Gehäuse 1 befestigt ist. Das Gehäuse 1 weist einen Deckel 4 auf, der eine Oberseite des Gehäuses 1 abdeckt. Das Gehäuse 1 kann in Form einer offenen Struktur mit offenen Seitenwänden und/oder Boden oder in Form einer geschlossenen Struktur mit geschlossenen Seitenwänden und Boden ausgebildet sein. Das Gehäuse 1 weist einen Boden 6 und Seitenwände 7 auf. Der Boden 6 schützt die Batterie nach unten und die Seitenwände 7 schützen die Batterie 6 in seitlicher Richtung. Der Deckel 4 schützt die Batterie von oben.

Die Aufgabe der Halterung 5 besteht darin, die Batterie 2 hängend im Gehäuse 1 in der Weise zu halten, dass ein Batterieboden 8 einen vorgegebenen Abstand zum Boden 6 des Gehäuses 1 aufweist. Zudem weisen seitliche Batteriewände 9 einen seitlichen Abstand zu den Seitenwänden 7 des Gehäuses 1 auf. Die Halterung 5 kann wie im dargestellten Beispiel in einem oberen Endbereich mit dem Gehäuse und/oder mit der Batterie 2 oder in einem mittleren Bereich mit dem Gehäuse und/oder mit der Batterie 2 oder in einem unteren Bereich mit dem Gehäuse und/oder mit der Batterie 2 befestigt sein.

Die Batterie 2 kann als rechteckförmiger Quader ausgebildet sein. Zudem kann das Gehäuse 1 eine rechteckförmige Querschnittsform, insbesondere eine rechteckförmige Kastenform aufweisen. Abhängig von der gewählten Ausführungsform kann das Gehäuse 1 auch eine Zylinderform oder andere Formen aufweisen. Das Gehäuse 1 ist aus einem Material gebildet, das eine ausreichende Stabilität zum Schutz der Batterie gegen mechanische Kräfte aufweist. Insbesondere sollte die Batterie 2 bei einem Umfallen des Gehäuses 1 oder bei einem Herabfalles des Gehäuses auf den Boden bei einem Aufprall des Gehäuses 1 auf einen anderen Gegenstand oder den Boden gegenüber mechanischen Beschädigungen geschützt sein.

Dazu kann das Gehäuse 1 aus einem nicht zu steifen, elastischen Material gebildet sein, das Aufprallkräfte abdämpft. Das Gehäuse kann z.B. aus Kunststoff, insbesondere aus Hartkunststoff bestehen. Weiterhin kann die Wandstärke des Gehäuses so dünn ausgebildet werden, dass eine Steifigkeit des Gehäuses erhalten wird, die Aufprallkräfte wenigstens teilweise abdämpft. Eine weitere dämpfende Wirkung wird unabhängig vom Gehäuse allein durch die hängende Anordnung der Batterie im Gehäuse erreicht.

Fällt das Gehäuse 1 beispielsweise mit dem Boden 6 auf einen Gegenstand oder einen Boden, so wird die Aufprallkraft über das Gehäuse wenigstens teilweise über das Gehäuse 1 abgedämpft, bevor die Aufprallkraft über die Halterung 5 auf die Batterie 2 übertragen wird. Somit wird eine bessere Dämpfung der Aufprallkraft erreicht. Je höher die Halterung 5 in Bezug auf den Boden 6 an den Seitenwänden 7 des Gehäuses 1 befestigt ist, desto besser ist die Dämpfung. Umso mehr Gehäusehöhe für die Dämpfung des Aufpralls zur Verfügung steht, umso besser.

Zudem kann abhängig von der gewählten Ausführungsform die Halterung 5 auch aus einem elastischen Material gebildet sein, wobei jedoch aufgrund des geringen Bauraumes nur eine geringe Auslenkung der Batterie 2 bei einem Aufprall des Gehäuses 1 sein soll. Die Batterie 2 sollte bei einem Aufprall des Gehäuses nicht an das Gehäuse anschlagen. Somit kann die Halterung 5 auch aus einem stabilen Material, insbesondere aus Metall gebildet sein. Eine wesentliche Funktion der Aufprallminderung ist im Gehäuse 1 und durch die hängende Halterung der Batterie im Gehäuse 1 realisiert.

Die Halterung 5 kann in Form von wenigstens zwei Halteelementen ausgebildet sein. Die zwei Halteelemente sollten gegenüberliegend an zwei Stellen der Seitenwände des Gehäuses befestigt sein. In einer weiteren Ausführung können als Halterung 5 auch mehr als zwei Halteelemente 11, insbesondere drei oder vier Halteelemente vorgesehen sein, die an jeweils einer Seite der Batterie 2 angeordnet sind und die jeweilige Seite der Batterie mit der jeweils benachbarten Seitenwand des Gehäuses 1 verbinden. Dadurch wird eine symmetrische und stabile Befestigung der Batterie 2 im Gehäuse 1 in Form einer hängenden Befestigung erreicht.

Fig. 2 zeigt in einer schematischen Darstellung von oben einen Blick auf das Gehäuse 1 der Fig. 1, wobei auf die Darstellung des Deckels 4 verzichtet wurde. Die Batterie 2 ist in einem Innenraum 10 angeordnet, der von dem Gehäuse 1 umgeben wird. Das Gehäuse 1 weist in der dargestellten Ausführungsform vier Seitenwände 7 auf. Die Batterie ist in dem dargestellten Ausführungsbeispiel über vier Haltelemente 11 als Halterung 5 an den vier Seitenwänden 7 befestigt. Die dargestellten Halteelemente 11 sind als schmale Stege ausgebildet. Abhängig von der gewählten Ausführungsform können auch nur zwei oder drei Halteelemente 11 vorgesehen sein, um die Batterie 2 hängend im Gehäuse 1 zu befestigen. Zudem können abhängig von der gewählten Ausführungsform die Halteelemente 11 nicht in Form von schmalen Stegen, sondern in Form von breiten Stegen ausgebildet sein, die sich beispielsweise über mehr als 30 % oder mehr als 50 % der Länge der Seitenwände 7 erstrecken.

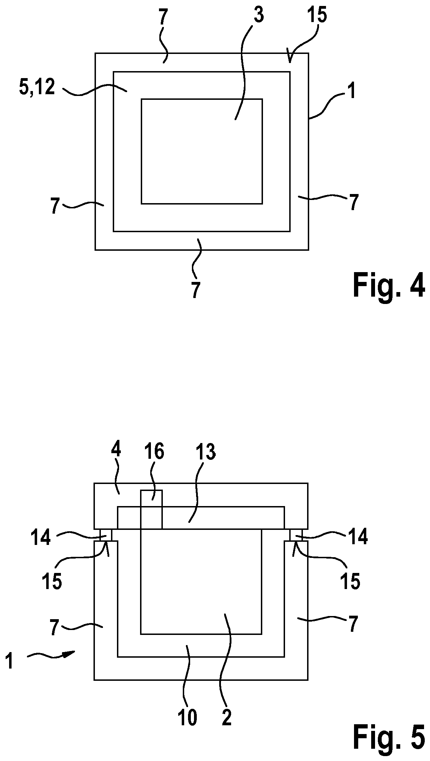

Fig. 3 zeigt eine Ausführungsform, bei der die Halteelemente 11 auf den Oberseiten der Seitenwände 7 aufliegen. Zudem erstrecken sich die Haltelemente jeweils entlang einer gesamten Länge einer Seite der Batterie. Abhängig von der gewählten Ausführungsform kann die Halterung 5 auch in Form eines geschlossenen umlaufenden Rahmens ausgebildet sein, wie schematisch in Fig. 4 dargestellt ist. Fig. 4 zeigt die Anordnung, bei der die Batterie 2 als Halterung 5 einen umlaufenden Rahmen 12 aufweist, der umlaufend mit den Seitenwänden 7 des Gehäuses 1 mechanisch verbunden ist. Die Halterung in Form der Haltelemente und/oder des Rahmens 12 kann seitlich an einer bestimmten Höhe der Seitenwände 7 mit den Seitenwänden 7 befestigt sein oder auf den Seitenwänden 7 aufliegen. Wie bereits ausgeführt, wird eine schockdämpfende Funktion des Gehäuses 1 dadurch verbessert, dass die Befestigung der Batterie 2 möglichst weit oben mit einem möglichst großen Abstand zum Boden 6 des Gehäuses 1 erfolgt.

Bei der Ausführungsform, bei der der Rahmen 12 oder die Haltelemente 11 auf den Seitenwänden 7 aufliegen, ist bei Vorsehen eines Deckels der Deckel 4 zusätzlich auf den Seitenwänden 7 beziehungsweise auf dem Rahmen 12 angeordnet.

Das Gehäuse 1 kann ein geschlossenes, topfförmiges Gehäuse darstellen, wobei ein Boden des Gehäuses mit einer umlaufenden Seitenwand, beispielsweise mit vier Seitenwänden verbunden ist. Die vier Seitenwände begrenzen einen offenen Deckelbereich. Das topfförmige Gehäuse begrenzt den Innenraum 10. Die vier Seitenwände weisen einen umlaufenden Deckelrand auf, wobei der Deckelrand den Deckelbereich umgibt. Wie in den Figuren 2 bis 4 dargestellt ist, kann die Halterung der Batterie auf dem umlaufenden Deckelrand des Gehäuses aufliegen.

An der Batterie 2 ist eine Deckelplatte 13 befestigt, die gleichzeitig den Rahmen 12 bildet, der auf den Oberseiten der Seitenwände 7 des Gehäuses 1, d.h. auf einem Deckelrand 15 aufliegt. Die Deckelplatte ist dabei oberhalb der Batterie 2 angeordnet und deckt die Batterie 2 nach oben ab. Bei einer weiteren Ausführungsform kann die Deckelplatte 13 auch seitlich in einer beliebigen Höhe mit den Seitenwänden 7 des Gehäuses 1 verbunden sein.

Fig. 5 zeigt in einer schematischen Querschnittsdarstellung eine entsprechende Ausführungsform, bei der eine Oberseite der Batterie 2 von einer Deckelplatte 13 abgedeckt ist. Die Batterie 2 ist an der Deckelplatte 13 befestigt. Die Deckelplatte 13 ragt seitlich über die Batterie 2 wenigstens auf zwei Seiten oder drei Seiten oder vorzugsweise auf vier Seiten über die Batterie 2 hinaus. Die hinausragenden Bereiche sind auf den zwei, drei oder vier Seiten auf einen Deckelrand 15 aufgelegt, der durch die oberen Enden der Seitenwände 7 gebildet ist. Abhängig von der gewählten Ausführungsform kann zur Abdichtung gegenüber Feuchtigkeit oder Staub eine Dichtung 14 zwischen der Deckelplatte 13 und dem Deckelrand 15 vorgesehen sein. Dies ist insbesondere von Vorteil, wenn die Deckelplatte 13 einen vollständig umlaufenden Randbereich aufweist, der umlaufend auf dem Deckelrand 15 aufliegt. Auf diese Weise wird ein gegenüber Feuchtigkeit und/oder Staub geschützter Innenraum 10 gebildet. Dadurch ist die Batterie 2 gegenüber Feuchtigkeit und Staub durch ein topfförmiges Gehäuse 1, das geschlossen ausgebildet ist, und die Deckelplatte 13 geschützt. Zudem ist der Deckel 4 auf der Deckelplatte 13 angeordnet. Beispielsweise kann die Deckelplatte 13 aus einem dünnen Material gebildet sein und der Deckel 4 aus einem dickeren, stabileren Material gebildet sein. Somit übernimmt die Deckelplatte 13 zwar die hängende Halterungsfunktion für die Batterie 2 und eventuell noch die Abdichtungsfunktion gegenüber Feuchtigkeit und Staub, aber nicht den mechanischen Schutz der Batterie. Der mechanische Schutz wird beispielsweise durch einen entsprechend mechanisch stabil ausgeführten Deckel 4 realisiert.

Die Deckelplatte 13 kann abhängig von der gewählten Ausführungsform auf einer Oberseite gegenüberliegend zur Batterie 2 wenigstens ein Kühlelement 16 aufweisen, des nur schematisch in Fig. 5 dargestellt ist. Das Kühlelement 16 kann vom Deckel 4 abgedeckt sein oder über den Deckel 4 nach oben oder seitlich hinausragen. Zudem kann das Kühlelement 16 thermisch an die Batterie 2 gekoppelt sein. Dazu kann beispielsweise die Deckelplatte 13 selbst aus einem thermisch leitenden Material wie zum Beispiel aus Metall gebildet sein. Zudem kann abhängig von der gewählten Ausführungsform das Kühlelement 16 einen Teil der Deckelplatte 13 bilden und in den Innenraum 10 ragen. Somit ist das Kühlelement 16 direkt mit der Batterie 2 thermisch gekoppelt. Dazu kann das Kühlelement 16 direkt an die Batterie 2 beziehungsweise direkt an eine Oberseite der Batterie 2 angrenzen. Das Kühlelement 16 und die Deckelplatte 13 können einstofflich und/oder einstückig ausgebildet sein. Weiterhin können das Kühlelement 16 und die Deckelplatte 13 aus zwei verschiedenen Materialien gebildet sein und einteilig ausgebildet sein. Die Batterie 2 ist z.B. als wieder aufladbare Batterie ausgebildet.

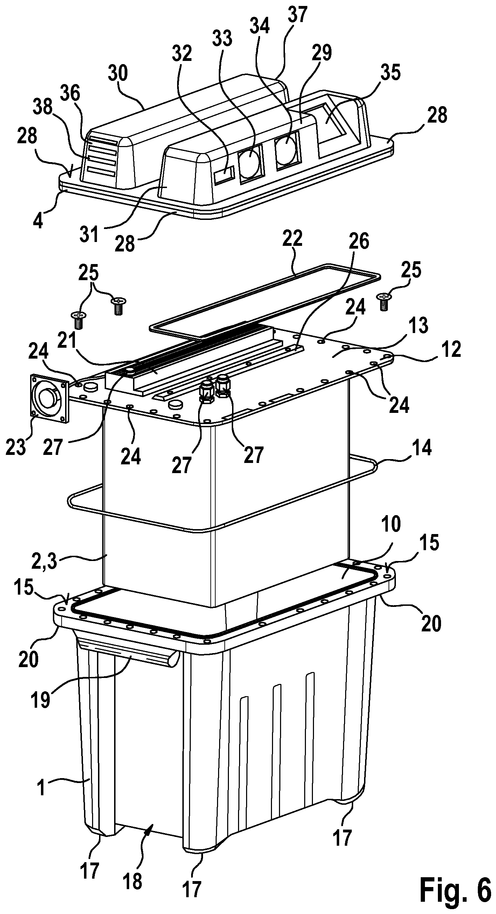

Fig. 6 zeigt in einer Explosionsdarstellung schematisch einen Aufbau einer Ausführungsform einer Vorrichtung mit einem Gehäuse 1 und einer Batterie. Die Batterie ist in der Darstellung nicht sichtbar, sondern in einem Batteriegehäuse 3 angeordnet. Die Batterie liegt z.B. auf einem Boden des Batteriegehäuses 3 auf. Das Batteriegehäuse 3 kann luftdicht und/oder staubdicht und/oder feuchtigkeitsdicht ausgebildet sein. Das Batteriegehäuse 3 ist beispielsweise als geschlossenes Gehäuse ausgebildet, in dem die Batterie 2 geschützt vor Umwelteinflüssen angeordnet ist. Auch in den vorab beschriebenen Ausführungsformen der Figuren 1 bis 5 kann ein solches Batteriegehäuse 3 vorgesehen sein, in dem die Batterie 2 angeordnet ist. Abhängig von der gewählten Ausführungsform kann auf 5das Batteriegehäuse 3 auch verzichtet werden.

Es ist ein Deckel 4 vorgesehen, der auf das Gehäuse 1 montiert ist. Das Batteriegehäuse 3 weist auf der Oberseite eine Deckelplatte 13 auf, die im äußeren Randbereich einen geschlossenen umlaufenden Rahmen 12 bildet. Im montierten Zustand liegt der umlaufende Rahmen 12 auf dem umlaufenden Deckelrand 15 des Gehäuses 1 auf. Zwischen dem Rahmen 12 und dem Deckelrand 15 ist eine umlaufende Dichtung 14 angeordnet. Auf diese Weise wird der Innenraum 10 des Gehäuses 1 feuchtigkeitsdicht und/oder staubdicht mithilfe der Dichtung 14 und der Deckelplatte 13 abgedichtet. Auf die Dichtung 14 kann auch verzichtet werden. Der Rahmen 12 sorgt dafür, dass die Batterie 2 hängend im Gehäuse 1 gelagert ist. Da die Auflage der Deckelplatte 13 auf dem Deckelrand 15 erfolgt, kann eine gesamte Höhe des Gehäuses 1 zwischen dem Boden 6 und dem Deckelrand 15 für eine Stoßmilderung ausgenutzt werden. Der Rahmen 12 ist als umlaufender Rahmen ausgebildet, der im Wesentlichen die Kontur einer rechteckförmigen Ringform aufweist.

Das Gehäuse 1 weist in der dargestellten Ausführungsform in vier Eckbereichen jeweils am Boden 6 einen Stehfuß 17 auf. Zudem weist das Gehäuse 1 an schmalen Seitenwänden 7 jeweils eine Einbuchtung 18 auf, die eine erhöhte Steifigkeit des Gehäuses 1 bewirkt. Die Stehfüße 17 ragen um eine kleine Strecke beispielsweise 1 bis 2 cm über dem Boden 6 nach unten aus dem Boden 6 heraus. Zudem weist das Gehäuse 1 an schmalen Seitenwänden 7 Haltegriffe 19 im oberen Randbereich angrenzend an den Deckelrand 15 auf. Weiterhin weist das Gehäuse 1 im oberen Endbereich der Seitenwände 7 einen umlaufenden, nach außen über die Seitenwände 7 hinausragenden zweiten Rahmen 20 auf. Eine Oberseite des zweiten Rahmens 20 bildet den Deckelrand 15. Auf dem zweiten Rahmen 20 liegt im montierten Zustand der Rahmen 12 der Deckelplatte 13 und der Deckel 4 auf.

Das Batteriegehäuse 3 ist im dargestellten Beispiel im Querschnitt rechteckförmig ausgebildet, wobei ein Boden und vier Seitenwände 7 vorgesehen sind. Das Batteriegehäuse 3 ist durch die Deckelplatte 13 nach oben hin verschlossen. Auf der Oberseite der Deckelplatte 13 ist in einem ersten Bereich ein Kühlelement 21 ausgebildet. Das Kühlelement 21 erstreckt sich über nahezu die gesamte Länge der Deckelplatte 13 und bedeckt ungefähr ein Drittel der Breite der Deckelplatte 13. Die Deckelplatte 13 ist in dem dargestellten Ausführungsbeispiel rechteckförmig ausgebildet. Weiterhin ist eine zweite ringförmig ausgebildete Dichtung 22 dargestellt. Die zweite Dichtung 22 ist im montierten Zustand um das Kühlelement 21 herumgeführt und zwischen der Deckelplatte 13 und dem Deckel 4 angeordnet. Zudem ist ein elektrischer Lüfter 23 schematisch dargestellt, der im montierten Zustand über dem Kühlelement 21 und unter dem Deckel 4 angeordnet ist.

Der Rahmen 12 der Deckelplatte 13 weist umlaufend Befestigungslöcher 24 auf, in die Befestigungsmittel wie zum Beispiel Schrauben 25 eingeschraubt sind, um die Deckelplatte 13 am zweiten Rahmen 20 befestigen. In der Mitte der Deckelplatte 13 ist parallel zur Längsachse der Deckelplatte 13 eine Befestigungsleiste 26 auf der Oberseite der Deckelplatte 13 ausgebildet. Die Befestigungsleiste 26 erstreckt sich über die gesamte Länge des Kühlelementes 21 und ist in einem vorgegebenen Abstand parallel zum Kühlelement 21 angeordnet. Die Befestigungsleiste 26 weist Gewindelöcher auf, die zur Aufnahme von Befestigungsschrauben des Deckels 4 dienen. Weiterhin sind in der Deckelplatte 13 abgedichtete Durchführungen 27 zum Durchführen von elektrischen Leitungen vorgesehen. Zur Abdichtung können ringförmige Elemente aus Gummi, Silikon oder Kunststoff vorgesehen sein, die einen Spalt zwischen der Durchführung und den elektrischen Leitungen staub- und/oder feuchtigkeitsdicht abdichten. Die Durchführungen 27 sind sowohl im Bereich des Kühlelementes 21 als auch in einem zweiten Bereich der Deckelplatte 13 vorgesehen, wobei der zweite Bereich in Bezug auf die Befestigungsleiste 26 gegenüberliegend zum Kühlelement 21 angeordnet ist.

Der Deckel 4 weist einen umlaufenden Deckelrahmen 28 auf. Zudem weist der Deckel 4 zwei Ausbuchtungen 29, 30 auf, die parallel zueinander angeordnet sind und sich entlang der Längsrichtung der rechteckförmigen Form des Deckels 4 erstrecken. Die zwei Ausbuchtungen 29, 30 bilden zwei Deckelbereiche, wobei die zwei Deckelbereiche im montierten Zustand des Deckels 4 voneinander getrennt sind. Zwischen den zwei Ausbuchtungen 29, 30 ist ein Deckelboden 31 ausgebildet, der sich entlang der gesamten Länge des Deckels 4 erstreckt und auf annähernd gleicher Höhe wie der Deckelrahmen 28 angeordnet ist. An der ersten Ausbuchtung 29 sind auf der Außenseite elektrische Anschlüsse 32, 33, 34, beispielsweise Steckdosen, für den Anschluss von elektrischen Leitungen vorgesehen. In dem dargestellten Ausführungsbeispiel sind eine USB-Dose 32, und zwei Steckdosen 33, 34 angeordnet. Zudem ist auf der Außenseite der ersten Ausbuchtung 29 eine Anzeige 35 beispielsweise in Form eines LCD-Displays angeordnet. Die elektrischen Anschlüsse des Gehäuses 1 können zum Laden der Batterie oder zum Abgeben von Strom aus der Batterie verwendet werden.

Die zweite Ausbuchtung 30 weist an gegenüberliegenden schmalen Seitenflächen 36, 37 Lüftungsschlitze 38 auf. Die zwei Ausbuchtungen 29,30 sind in der dargestellten Ausführungsform im Wesentlichen mit einer sehr ähnlichen Kontur ausgebildet, das heißt die Ausbuchtungen sind gleich lang, gleich hoch und annähernd gleich breit ausgebildet.

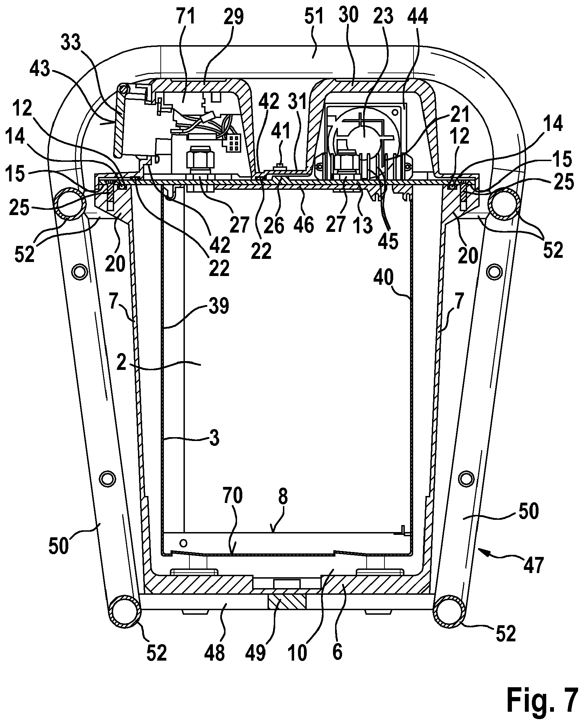

Fig. 7 zeigt einen Querschnitt durch das Gehäuse 1 der Figur 6 im montierten Zustand senkrecht zur Längsachse des Gehäuses 1. Das Batteriegehäuse 3 ist im Innenraum 10 des Gehäuses 1 angeordnet, wobei die Seitenwände 39, 40 des Batteriegehäuses 3 seitlich beabstandet zu den Seitenwänden 7 des Gehäuses 1 angeordnet sind. Zudem ist ein Boden 70 des Batteriegehäuses in einem vorgegebenen Abstand zum Boden 6 des Gehäuses 1 angeordnet. Die Deckelplatte 13, die das Batteriegehäuse 3 nach oben hin abdeckt, liegt mit dem umlaufenden Rahmen 12 auf dem umlaufenden Deckelrand 15 des zweiten Rahmens 20 des Gehäuses 1 auf. Zudem ist in dem dargestellten Ausführungsbeispiel zur Abdichtung die umlaufende Dichtung 14 zwischen dem Rahmen 12 und dem Deckelrand 15 angeordnet. Weiterhin sind die Schrauben 25 außerhalb der umlaufenden Dichtung 14 in die Deckelplatte 13 und den Deckelrand 15 eingeschraubt.

In dem Querschnitt der Fig. 7 sind nur einzelne Schrauben 25 dargestellt, wobei die Schrauben 25 vorzugsweise verteilt um den Rahmen 12 in einem konstanten Abstand zueinander angeordnet sind. Die Batterie 2 sitzt mit dem Batterieboden 8 auf einem Boden 70 des Batteriegehäuses 3 auf. In der Deckelplatte 13 sind zwei abgedichtete Durchführungen 27 eingebracht, wobei eine Durchführung 27 im Bereich der ersten Ausbuchtung 29 und die zweite Durchführung 27 im Bereich der zweiten Ausbuchtung 30 angeordnet ist. Der Deckel 4 ist mit dem Deckelrahmen 28 auf den Rahmen 12 der Deckelplatte 13 aufgelegt und über nicht dargestellte Befestigungsmittel, beispielsweise Schrauben, mit dem zweiten Rahmen 20 verschraubt. Dabei überdeckt der Deckelrahmen 28 in dem dargestellten Ausführungsbeispiel seitlich nach außen die Deckelplatte 13. Der Deckelboden 31 liegt auf der Befestigungsleiste 26 auf. Zudem ist der Deckelboden 31 über mehrere Befestigungsmittel 41, insbesondere Schrauben an der Befestigungsleiste 26 befestigt. Zudem liegt der Deckel 4 mit einer umlaufenden Leiste 42, die die erste Ausbuchtung 29 umgibt, auf der Deckelplatte 13 auf. Weiterhin ist zwischen der umlaufenden Leiste 42 und Deckelplatte 13 die zweite Dichtung 22 angeordnet. Somit wird der erste Deckelbereich 71, der von der Deckelplatte 13 und der ersten Ausbuchtung 29 begrenzt ist, feuchtigkeitsdicht gegenüber der Umwelt abgedichtet. Im ersten Deckelbereich können elektrische und/oder elektronische Schaltungen, insbesondere elektrische Leitungen, Steuerschaltungen usw. angeordnet sein. In Fig. 7 ist der Querschnitt durch die erste Ausbuchtung 29 im Bereich der ersten Steckdose 33 angeordnet. Die erste Steckdose 33 weist in dem dargestellten Ausführungsbeispiel eine Verschlusskappe 43 auf.

Im zweiten Deckelbereich 44, der von der zweiten Ausbuchtung 30 und der Deckelplatte 13 begrenzt wird, sind der Lüfter 23 und die Kühlelemente 21 angeordnet. Der Lüfter 23 ist über eine elektrische Leitung mit der Batterie 2 verbunden und wird von der Batterie 2 mit Strom versorgt. Das Kühlelement 21 ist beispielsweise in Form von mehreren, nebeneinander angeordneten Kühlrippen 45 ausgebildet, die nebeneinander angeordnet sind und sich in Längsrichtung parallel zur Längsachse des zweiten Deckelbereiches 44 erstrecken. Die Kühlrippen 45 können durch die Deckelplatte 13 geführt sein und sich in das Batteriegehäuse 3 erstrecken. Abhängig von der gewählten Ausführungsform kann auf der Unterseite der Deckelplatte 13 eine thermisch leitende, flächige Kühlfläche 46 ausgebildet sein, die mit den Kühlrippen 45 in Kontakt steht. Somit kann die Kühlfläche 46 Wärme vom Innenraum des Batteriegehäuses 3 aufnehmen und an die Kühlrippen 45 weiterleiten. Mithilfe des Lüfters 23 und der Lüftungsschlitze 38 kann die Wärmeabfuhr von den Kühlrippen 45 verbessert werden.

In dem dargestellten Beispiel sitzt das Gehäuse 1 in einem Tragrahmen 47. Der Tragrahmen 47 weist wenigstens ein Bodenelement 48 auf, auf dem der Boden 6 des Gehäuses 1 aufsitzt. In dem dargestellten Ausführungsbeispiel ist der Boden 6 über eine Schraubverbindung 49 mit dem Bodenelement 48 befestigt. Beispielsweise kann das Befestigungselement 49 in Form einer Schraubverbindung ausgebildet sein. Das Bodenelement 48 ist mit Seitenelementen 50 verbunden, die jeweils in einem Eckbereich des Gehäuses 1 angeordnet sind. Die Seitenelemente 50 sind bis über den Deckel 4 nach oben hinausgeführt. In der dargestellten Ausführungsform sind zwei Seitenelemente 50, die an gegenüberliegenden Ecken einer schmalen Seite des Gehäuses 1 angeordnet sind, über ein Verbindungselement 51 miteinander verbunden. Das Verbindungselement 51 ist oberhalb des Deckels 4 angeordnet. Auf diese Weise wird ein Schutz des Gehäuses, insbesondere des Deckels 4, bereitgestellt. Weiterhin können noch Querstreben 52 vorgesehen sein, die die Seitenelemente 50 entlang einer Längsseite oder einer Querseite des Gehäuses 1 miteinander verbinden.

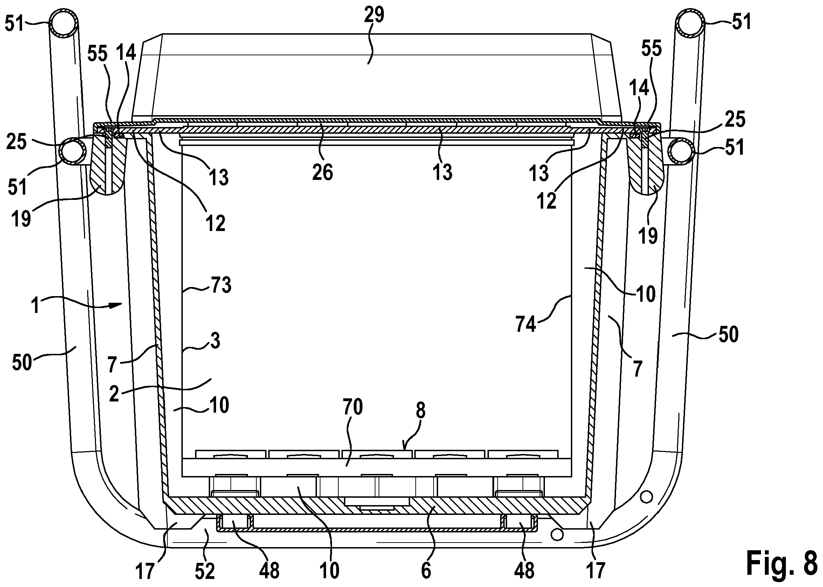

Fig. 8 zeigt einen Querschnitt in Längsrichtung durch das Gehäuse 1, der parallel zur Befestigungsleiste 26 angeordnet ist. Das Gehäuse 1 sitzt in dem dargestellten Ausführungsbeispiel nur mit dem Boden 6 auf zwei parallel angeordneten Bodenelementen 48 des Tragrahmens 47 auf. Sonstige Flächen des Gehäuses 1 sind seitlich gegenüber dem Tragrahmen 47 beabstandet. Dadurch wird dafür gesorgt, dass bei einem Umfallen des Gehäuses 1 mit dem Tragrahmen 47 ein Kraftimpuls nur über den Boden 6 auf das Gehäuse 1 übertragen wird. Die dritte und vierte Seitenwand 73,74 des Batteriegehäuses ist wie die erste und zweite Seitenwand 39,40 (Fig. 7) von den Seitenwänden 7 des Gehäuses beabstandet. Somit steht auch in dieser Ausführungsform die elastische Dämpfung des Kraftimpulses ausgehend vom Boden 6 bis über die gesamte Höhe der Seitenwände zur Verfügung, bevor der Kraftimpuls über die Deckelplatte 13 an die Batterie 2 weitergegeben wird. Zudem ist durch das Vorsehen des Tragrahmens 47 das

Gehäuse 1 gegenüber seitlichen Beschädigungen geschützt. Weiterhin kann mithilfe des Tragrahmens 47 das Gehäuse 1 leichter transportiert werden.

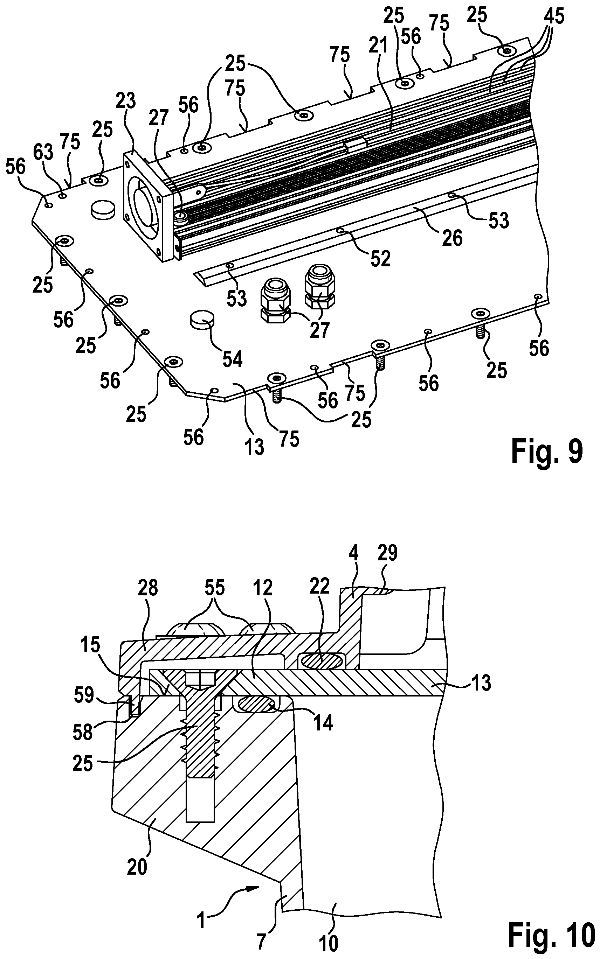

Fig. 9 zeigt in einer perspektivischen Darstellung einen Teilausschnitt der Deckelplatte 13. Dabei ist das Kühlelement 21 mit den Kühlrippen 45 dargestellt. Das Kühlelement 45 weist im Wesentlichen eine rechteckförmige Kontur auf. Das Kühlelement 21 erstreckt sich entlang einer Längsachse des Gehäuses bzw. der Deckelplatte 13. An einem Endbereich des Kühlelementes 21 ist der Lüfter 23 angeordnet. Zudem ist im Bereich des Kühlelementes 21 eine Durchführung 27 zum Durchführen von elektrischen Leitungen in den Innenraum 10 beziehungsweise in das Batteriegehäuse 3 vorgesehen. Weiterhin ist deutlich die erhöhte Befestigungsleiste 26 mit den Gewindebohrungen 53 dargestellt. Zudem sind im ersten Bereich weitere Durchführungen 27 zum Durchführen von elektrischen Leitungen in der Deckelplatte 13 vorgesehen. Die Durchführungen 27 weisen Dichtelemente auf, mit denen elektrische Leitungen, die durch die Durchführungen geführt sind, feuchtigkeitsdicht und/oder staubdicht abgedichtet sind. Zudem können in der Deckelplatte 13 Druckausgleichsventile 54 vorgesehen sein. Die Druckausgleichsventile 54 dienen dazu, um einen Druckausgleich zwischen dem Innenraum 10 des Batteriegehäuses 3 und der Außenwelt bzw. zwischen dem Innenraum 10 des Gehäuses 1 und der Umgebung zu realisieren. Beim Betrieb der Batterie 2 kann es vorkommen, dass das Material der Batterie ausgast. Ein entsprechender entstehender Überdruck wird über Ausgasungsventile 54 ausgeglichen werden. Weiterhin sind schematisch in der Deckelplatte 13 Schrauben 25 dargestellt, mit denen die Deckelplatte 13 am Deckelrand 15 verschraubt ist. Zudem sind verteilt über den Randbereich der Deckelplatte 13 Löcher 56 vorgesehen, über die die Befestigungsschrauben des Deckels 4 durch die Deckelplatte 13 in den Deckelrand 15 eingeschraubt werden können.

Fig. 10 zeigt einen vergrößerten Teilquerschnitt des Gehäuses 1 im Bereich des zweiten Rahmens 20. Die Deckelplatte 13 liegt mit dem Rahmen 12 auf dem Deckelrand 15 auf. Zudem ist im Rahmen 12 eine Schraube 25 eingeschraubt, die den Rahmen 12 am Deckelrand 15 festhält. Weiterhin ist der Deckel 4 mit dem Deckelrahmen 28 über dem Rahmen 12 angeordnet. Zwischen dem Rahmen 12 der Deckelplatte 13 und dem Deckelrand 15 ist die Dichtung 14 angeordnet. Dazu kann eine Nut im Deckelrand 15 vorgesehen sein. Weiterhin ist zwischen dem Deckelrahmen 28 und der Deckelplatte 13 die zweite Dichtung 22 angeordnet. Dazu kann eine Nut im Deckelrahmen 28 vorgesehen sein.

Weiterhin überdeckt der Deckelrahmen 28 seitlich einen äußeren Rand der Deckelplatte 13. In dem dargestellten Ausführungsbeispiel ist im Deckelrand 15 eine Nut 58 eingebracht, in die eine Leiste 59 des Deckelrahmens 28 eingreift. Die Nut 58 kann ringförmig umlaufend in den Deckelrand 15 des Gehäuses 1 eingebracht sein. Ebenso kann die Leiste 59 ringförmig umlaufend am Deckelrahmen 28 ausgebildet sein. Auf diese Weise wird eine verbesserte Abdichtung gegenüber Feuchtigkeit erreicht. Weiterhin sind in Fig. 10 Befestigungsschrauben 55 schematisch dargestellt, mit denen der Deckel 4 am Gehäuse 1, insbesondere am zweiten Rahmen 20 befestigt ist.

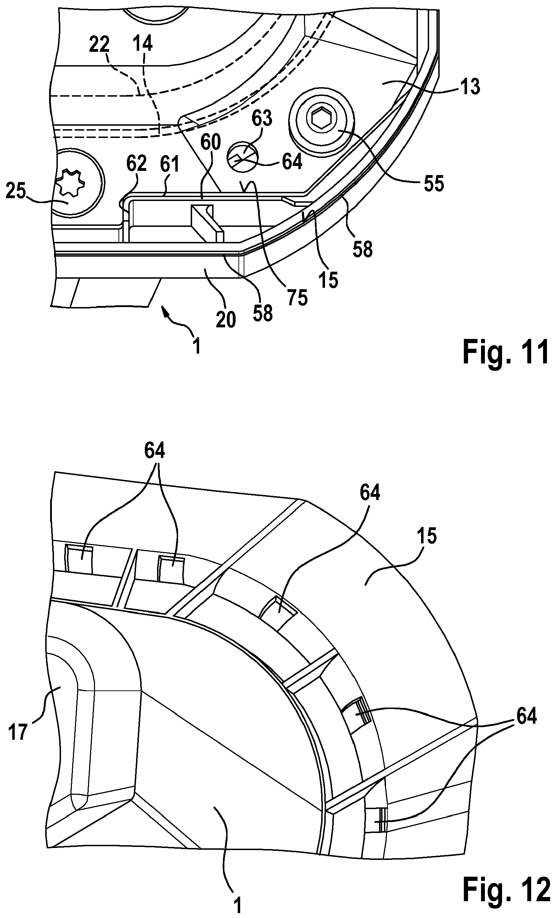

Fig. 11 zeigt in einer schematischen Darstellung einen Teilausschnitt eines Randbereiches des Gehäuses 1, wobei ein Teilabschnitt des Deckelrandes 15 dargestellt ist. Umlaufend ist im Deckelrand 15 die Nut 58 eingebracht. Zudem sind im Deckelrand 15 Anlagestege 60 vorgesehen. Der Anlagesteg 60 weist im Wesentlichen zwei Anlageflächen 61,62 auf. Die erste Anlagefläche 61 ist parallel zur Längsachse des Gehäuses 1 angeordnet ist und geht über eine Rundung in die zweite Anlagefläche 62 über. Die zweite Anlagefläche 62 ist senkrecht zur Längsachse angeordnet. Die Deckelplatte 13, die auf dem Deckelrand 15 aufliegt, weist eine entsprechende seitliche Kontur 75 auf. Die Kontur 75 liegt passgenau von innen an dem Anlagesteg 60 an.

Weiterhin ist eine Schraube 25 dargestellt, mit der die Deckelplatte 13 am Deckelrand 15 befestigt ist. Zudem weist die Deckelplatte 13 ein Entwässerungsloch 63 auf. Das Entwässerungsloch 63 ist beispielsweise in jedem Eckbereich des Gehäuses 1 angeordnet und ist oberhalb einer Entwässerungsöffnung 64 des Deckelrandes 15 angeordnet. Das Entwässerungsloch 63 und die Entwässerungsöffnung 64 sind außerhalb der Dichtung 14 angeordnet. Der Verlauf der Dichtung 14 ist schematisch als doppelte Strichlinie in Fig. 10 eingezeichnet. Zudem ist die zweite Dichtung 22 mit einer gestrichelten Linie schematisch dargestellt. Somit kann ein äußerer Bereich, der auch außerhalb der zweiten Dichtung 22 zwischen dem Deckel 4 und der Deckelplatte 13 ausgebildet ist, entwässert werden. Zur Verdeutlichung ist in Fig. 11 fiktiv eine Befestigungsschraube 55 dargestellt, wobei jedoch der Deckel 4 nicht dargestellt ist.

Fig. 12 zeigt in einer schematischen Darstellung eine Teilansicht von unten auf den Deckelrand 15, wobei mehrere Entwässerungsöffnungen 64 vorgesehen sind. Die Entwässerungsöffnungen 64 sind außerhalb des Verlaufes der Dichtung 14 im Deckelrand 15 ausgebildet.

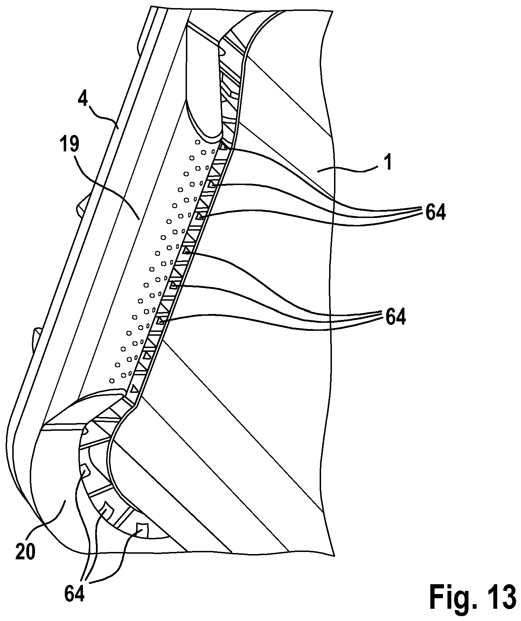

Fig. 13 zeigt ebenso eine Darstellung von einem Teilausschnitt des Gehäuses 1 von unten auf den zweiten Rahmen 20 des Gehäuses 1, wobei mehrere Entwässerungsöffnungen 64 dargestellt sind. Die Entwässerungsöffnungen 64 sind auch im Bereich der Haltegriffe 19 ausgebildet.

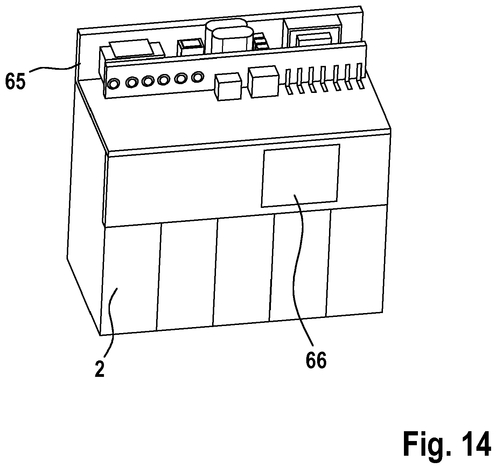

Fig. 14 zeigt in einer schematischen Darstellung die Batterie 2, die auf einer Oberseite eine erste elektrische Schaltung 65 aufweist. Zudem ist auf einer Seitenfläche der Batterie 2 eine zweite elektrische Schaltung 66 angeordnet. Die Batterie 2 und die erste und/oder die zweite Schaltung 65, 66 sind im Batteriegehäuse 3 angeordnet, falls ein Batteriegehäuse 3 vorgesehen ist. Auf diese Weise sind die Schaltungen 65, 66 gegenüber Umwelteinflüssen geschützt. Zudem bietet die Anordnung der ersten und/oder der zweiten Schaltung 65, 66 auf beziehungsweise an einer Seitenfläche der Batterie 2 eine kompakte Bauform. Die erste und/oder die zweite Schaltung 65, 66 können beispielsweise als Lade- und/oder Entladeschaltung ausgebildet sein. Zudem können die erste und/oder die zweite Schaltung 65, 66 als Steuerschaltung und/oder als Überwachungsschaltung für die Batterie 2 ausgebildet sein. Die erste und/oder die zweite Schaltung 65, 66 weisen beispielsweise eine Leiterplatte mit elektrischen und/oder elektronischen Schaltungen auf.

Die Batterie 2 ist beispielsweise als Lithium-Eisenphosphat-Batterie ausgebildet. Durch die direkte Anordnung der ersten und/oder der zweiten elektrischen Schaltung 65, 66 auf der Batterie 2 wird eine kompakte Bauform erhalten. Zudem kann durch die Anordnung der Deckelplatte 13 direkt oberhalb der ersten Schaltung 65 entstehende Wärme der ersten und/oder der zweiten Schaltung 65, 66 effizient und schnell abgeführt werden.

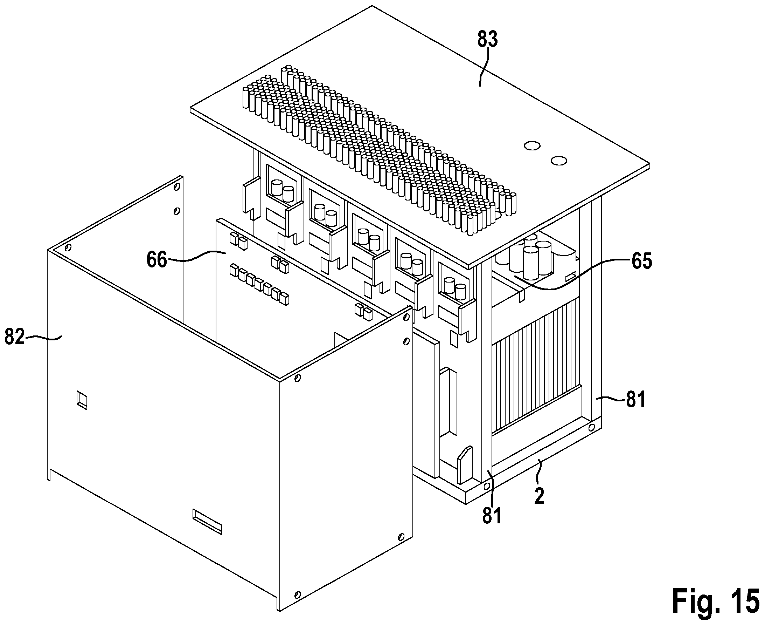

Fig. 15 zeigt in einer perspektivischen Darstellung einen Aufbau des Batteriegehäuses 3. Das Batteriegehäuse 3 ist in dem dargestellten Ausführungsbeispiel aus drei Gehäuseteilen 81, 82, 83 aufgebaut. Das erste Gehäuseteil wird durch eine Rückwand und eine Bodenplatte gebildet, die L-förmig miteinander verbunden sind. Das zweite Gehäuseteil wird durch drei miteinander verbundene Seitenwände dargestellt. Das dritte Gehäuseteil 83 wird durch eine weitere Deckelplatte gebildet. Die Gehäuseteile 81, 82, 83 sind beispielsweise aus Metall gebildet und über Klemm- und/oder Schraubverbindungen miteinander verbunden. Die dreiteilige Ausführung des Batteriegehäuses 3 weist den Vorteil auf, dass eine einfache Montage der Batterie 2 möglich ist. Somit kann das zweite Gehäuseteil seitlich auf das erste und das dritte Gehäuseteil aufgeschoben werden beziehungsweise durch ein seitliches Abziehen vom ersten und vom dritten Gehäuseteil gelöst werden. Dadurch kann ein guter und großflächiger Zugang zu der Batterie selbst mit einfachen Maßnahmen ermöglicht werden. Zudem kann durch die Ausbildung des dritten Gehäuseteils 83 in Form der Deckelplatte durch ein einfaches Lösen des dritten Gehäuseteils Zugang zu der ersten Schaltung 65 erreicht werden. Die erste Schaltung 65 ist auf der Oberseite der Batterie angeordnet. Die erste Schaltung 65 beinhaltet beispielsweise Bauteile, die eine große Wärmeentwicklung haben. Dazu zählen beispielsweise Ladeschaltungen zum Laden der Batterie beziehungsweise Versorgungsschaltungen zum Versorgen eines Verbrauchers mit Strom aus der Batterie.

Die zweite Schaltung 66, die auf der Seitenfläche angeordnet ist, die vom zweiten Gehäuseteil 82 abgedeckt wird, kann beispielsweise Schaltungen für ein Batteriemanagement oder Steuerschaltungen zum Steuern eines Lade- bzw. Entladeprozesses der Batterie aufweisen. Somit kann abhängig von dem vorliegenden Fehlerfall beispielsweise nur die Deckelplatte entfernt werden, um die erste Schaltung 65 zu reparieren. Weiterhin kann beispielsweise nur das zweite Gehäuseteil 82 vom Batteriegehäuse entfernt werden, wenn Fehler in der zweiten Schaltung 66 auftreten.

Abhängig von der gewählten Ausführungsform kann das Batteriegehäuse auch Lüftungsschlitze beinhalten. Zudem wird durch die Ausbildung des Batteriegehäuses aus Metall eine gute Wärmeleitung auf der Außenseite der Batterie erreicht. Abhängig von der gewählten Ausführungsform kann das Batteriegehäuse auch aus einem anderen Material, insbesondere aus einem thermisch leitenden Kunststoff hergestellt sein.

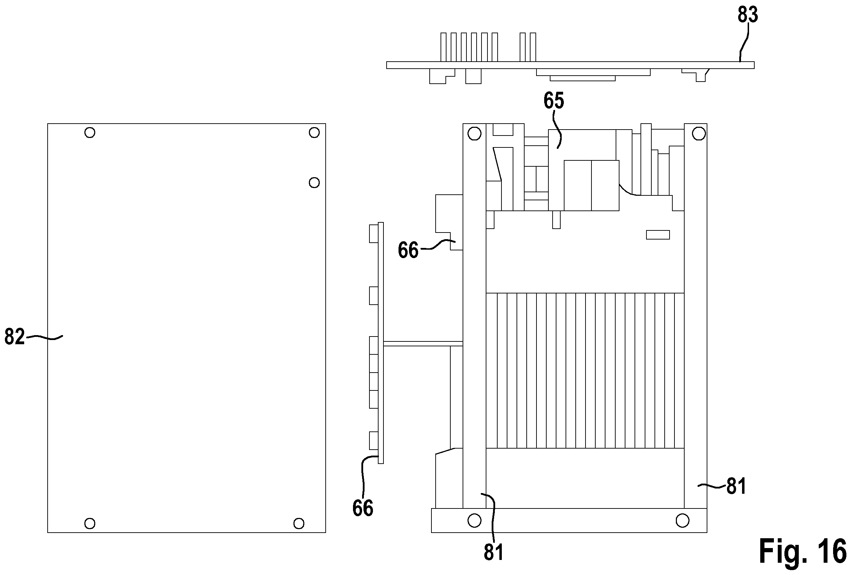

Fig. 16 zeigt in einer schematischen Darstellung eine weitere Ansicht des Batteriegehäuses 3 und der Batterie 2.

## Patentansprüche

1. Vorrichtung mit einem Gehäuse (1) und mit einer Batterie (2), wobei das Gehäuse (1) einen Boden (6) und Seitenwände (7) aufweist, wobei die Batterie (2) eine Deckelplatte (13) mit einer Halterung (5, 11, 12) aufweist, und die Halterung (5, 11, 12) der Deckelplatte (13) mit dem Gehäuse (1) in der Weise verbunden ist, dass die Batterie (2) hängend im Gehäuse (1) befestigt ist, wobei ein Boden (8) der Batterie (2) einen Abstand vom Boden (6) des Gehäuses (1) aufweist und Seitenwände der Batterie (2) einen Abstand von den Seitenwänden (7) des Gehäuses (1) aufweisen, wobei das Gehäuse (1) mit einem Deckel (4) verschlossen ist, der auf den Seitenwänden (7) des Gehäuses (1) aufliegt, und der Deckel (4) einen umlaufenden Deckelrahmen (28) aufweist, der derart in zwei getrennte Deckelbereiche (71, 44) unterteilt ist, dass der erste Deckelbereich (71) zur Aufnahme wenigstens einer elektrischen Komponente vorgesehen ist und der zweite Deckelbereich (44) zur Aufnahme wenigstens eines Kühlelementes (21) vorgesehen ist, **dadurch gekennzeichnet, dass** der erste Deckelbereich (71) eine umlaufende Dichtung (22) aufweist, die zwischen der Deckelplatte (13) der Batterie (2) und einem umlaufenden Randbereich (42) des ersten Deckelbereiches (71) angeordnet ist.

2. Vorrichtung nach Anspruch 1, **dadurch gekennzeichnet, dass** das Gehäuse (1) aus Kunststoff gebildet ist.

3. Vorrichtung nach einem der vorhergehenden Ansprüche, **dadurch gekennzeichnet, dass** in einem oberen Endbereich der Batterie (2) auf wenigstens zwei Seiten der Batterie (2) ein Halteelement (11, 12) als Halterung ausgebildet ist, wobei die Halteelemente (11, 12) an wenigstens zwei Seitenwänden (7) des Gehäuses (1) befestigt sind.

4. Vorrichtung nach einem der vorhergehenden Ansprüche, **dadurch gekennzeichnet, dass** der Boden (6) des Gehäuses (1) und die Seitenwände (7) ein geschlossenes topfförmiges Gehäuse (1) mit einem offenen Deckelbereich bilden, wobei die Seitenwände (7) einen umlaufenden Deckelrand (15) aufweisen, wobei der Deckelrand (15) den Deckelbereich umgibt, wobei die Halterung (11,12) der Batterie (2) auf dem Deckelrand (15) des Gehäuses (1) aufliegt.

5. Vorrichtung nach einem der vorhergehenden Ansprüche, **dadurch gekennzeichnet, dass** die Deckelplatte (13) auf der Batterie (2) befestigt ist und eine Oberseite der Batterie (2) abdeckt, wobei äußere Randbereiche (12) der Deckelplatte (13) wenigstens abschnittsweise seitlich über die Batterie (2) hinausragen und die Halterung (12) der Batterie (2) darstellen.

6. Vorrichtung nach den Ansprüchen 4 und 5, **dadurch gekennzeichnet, dass** die äußeren Randbereiche (12) der Deckelplatte (13) einen umlaufenden, geschlossenen Halterand (12) bilden, wobei der Halterand (12) über dem Deckelrand (15) angeordnet ist, wobei zwischen dem Halterand (12) und dem Deckelrand (15) eine um den Deckelbereich laufende Dichtung (14) angeordnet ist, so dass ein Zwischenraum zwischen Halterand (12) und dem Deckelrand (15) gegen Eindringen von Feuchtigkeit abgedichtet ist.

7. Vorrichtung nach Anspruch 6, **dadurch gekennzeichnet, dass** in der Deckelplatte (13) wenigstens ein Druckausgleichsventil (54) vorgesehen ist.

8. Vorrichtung nach einem der vorhergehenden Ansprüche 5 bis 7, **dadurch gekennzeichnet, dass** die Deckelplatte (13) auf einer Oberseite gegenüberliegend zur Batterie (2) wenigstens ein Kühlelement (21) aufweist, wobei insbesondere die Deckelplatte (13) aus einem thermisch leitenden Material wie Metall gebildet ist.

9. Vorrichtung nach einem der vorhergehenden Ansprüche 5 bis 8, **dadurch gekennzeichnet, dass** die Deckelplatte (13) eine Durchführung (27) für elektrische Leitungen aufweist, wobei insbesondere die Durchführung (27) staub- und/oder feuchtigkeitsdicht ausgebildet ist.

10. Vorrichtung nach Anspruch 1, **dadurch gekennzeichnet, dass** jeder Deckelbereich (71, 44) eine Ausbuchtung nach oben aufweist, wobei zwischen den Ausbuchtungen (29, 30) ein Deckelboden (31) vorgesehen ist, wobei der Deckelboden (31) auf annähernd gleicher Höhe wie der Deckelrahmen (28) angeordnet ist.

11. Vorrichtung nach Anspruch 10, **dadurch gekennzeichnet, dass** der erste Deckelbereich (71) gegenüber dem zweiten Deckelbereich (44) abgedichtet ist, wobei der zweite Deckelbereich (44) wenigstens eine Lüftungsöffnung (38) aufweist.

12. Vorrichtung nach Anspruch 11, **dadurch gekennzeichnet, dass** im zweiten Deckelbereich (44) ein Lüfter (23) angeordnet ist.

13. Vorrichtung nach einem der vorhergehenden Ansprüche, **dadurch gekennzeichnet, dass** die Batterie (2) auf einer Oberseite und/oder auf einer Seitenfläche eine elektronische Schaltung (65, 66) aufweist, wobei die Schaltung (65, 66) insbesondere eine Lade-/Entladesteuerung und/oder eine Überwachungsschaltung für die Batterie (2) aufweist.

14. Vorrichtung nach einem der vorhergehenden Ansprüche, **dadurch gekennzeichnet, dass** die Batterie (2) insbesondere mit der elektronischen Schaltung (65, 66) in einem Batteriegehäuse (3) angeordnet ist, das mit der Halterung (5, 11, 12) verbunden ist und ein Boden (70) des Batteriegehäuses (3) vom Boden (8) des Gehäuses (1) einen Abstand aufweist.

15. Vorrichtung nach einem der vorhergehenden Ansprüche, **dadurch gekennzeichnet, dass** der Boden (8) des Gehäuses (1) auf einem Tragrahmen (47) aufsitzt, wobei der Tragrahmen (47) mindestens ein Bodenelement (48) und vier Seitenelemente (50) aufweist, wobei der Boden (8) auf dem Bodenelement (48) aufsitzt, und wobei die vier Seitenelemente (50) in vier Eckbereichen des Gehäuses (1) angeordnet sind, und wobei die vier Seitenelemente (50) vom Boden bis über den Deckel (4) des Gehäuses (1) geführt sind.

16. Vorrichtung nach einem der vorhergehenden Ansprüche, **dadurch gekennzeichnet, dass** elektrische Anschlüsse (32, 33, 34) zum Aufnehmen und/oder Abgeben von Strom vorgesehen sind, wobei die Vorrichtung eine mobile Stromversorgung darstellt, und die Batterie (2) eine wiederaufladbare Batterie darstellt.

## Claims

1. Device comprising a housing (1) and a battery (2), wherein the housing (1) has a base (6) and side walls (7), wherein the battery (2) has a cover plate (13) with a retainer (5, 11, 12), and the retainer (5, 11, 12) of the cover plate (13) is connected to the housing (1) in such a way that the battery (2) is secured in a suspended position in the housing (1), wherein a base (8) of the battery (2) is at a distance from the base (6) of the housing (1), and side walls of the battery (2) are at a distance from the side walls (7) of the housing (1), wherein the housing (1) is closed with a lid (4) which lies on the side walls (7) of the housing (1), and the lid (4) has a circumferential lid frame (28) which is divided into two separate lid regions (71, 44) in such a way that the first lid region (71) is provided to receive at least one electrical component and the second lid region (44) is provided to receive at least one cooling element (21), **characterized in that** the first lid region (71) has a circumferential seal (22) which is arranged between the cover plate (13) of the battery (2) and a circumferential edge region (42) of the first lid region (71).

2. Device according to Claim 1, **characterized in that** the housing (1) is made of plastic.

3. Device according to one of the preceding claims, **characterized in that**, in an upper end region of the battery (2), a holding element (11, 12) is formed as retainer on at least two sides of the battery (2), wherein the holding elements (11, 12) are secured to at least two side walls (7) of the housing (1) .

4. Device according to one of the preceding claims, **characterized in that** the base (6) of the housing (1) and the side walls (7) form a closed pot-shaped housing (1) with an open lid region, wherein the side walls (7) have a circumferential lid edge (15), wherein the lid edge (15) surrounds the lid region, wherein the retainer (11, 12) of the battery (2) lies on the lid edge (15) of the housing (1).

5. Device according to one of the preceding claims, **characterized in that** the cover plate (13) is secured on the battery (2) and covers a top face of the battery (2), wherein outer edge regions (12) of the cover plate (13) protrude laterally past the battery (2) at least in parts and constitute the retainer (12) of the battery (2).

6. Device according to Claims 4 and 5, **characterized in that** the outer edge regions (12) of the cover plate (13) form a circumferential, closed holding edge (12), wherein the holding edge (12) is arranged above the lid edge (15), wherein a seal (14) extending around the lid region is arranged between the holding edge (12) and the lid edge (15) such that a space between the holding edge (12) and the lid edge (15) is sealed off against entry of moisture.

7. Device according to Claim 6, **characterized in that** at least one pressure compensation valve (54) is provided in the cover plate (13).

8. Device according to one of Claims 5 to 7, **characterized in that** the cover plate (13) has at least one cooling element (21) on a top face lying opposite the battery (2), wherein in particular the cover plate (13) is formed from a thermally conductive material such as metal.

9. Device according to one of Claims 5 to 8, **characterized in that** the cover plate (13) has a feedthrough (27) for electrical lines, wherein in particular the feedthrough (27) is designed to be dust-tight and/or moisture-tight.

10. Device according to Claim 1, **characterized in that** each lid region (71, 44) has a bulge at the top, wherein a lid base (31) is provided between the bulges (29, 30), wherein the lid base (31) is arranged at approximately the same height as the lid frame (28).

11. Device according to Claim 10, **characterized in that** the first lid region (71) is sealed off from the second lid region (44), wherein the second lid region (44) has at least one ventilation opening (38) .

12. Device according to Claim 11, **characterized in that** a fan (23) is arranged in the second lid region (44) .

13. Device according to one of the preceding claims, **characterized in that** the battery (2) has an electronic circuit (65, 66) on a top face and/or on a side face, wherein the circuit (65, 66) has in particular a charging/discharging controller and/or a monitoring circuit for the battery (2).

14. Device according to one of the preceding claims, **characterized in that** the battery (2) is in particular arranged with the electronic circuit (65, 66) in a battery housing (3) which is connected to the retainer (5, 11, 12), and a base (70) of the battery housing (3) is at a distance from the base (8) of the housing (1).

15. Device according to one of the preceding claims, **characterized in that** the base (8) of the housing (1) sits on a support frame (47), wherein the support frame (47) has at least one base element (48) and four side elements (50), wherein the base (8) sits on the base element (48), and wherein the four side elements (50) are arranged in four corner regions of the housing (1), and wherein the four side elements (50) are routed from the base to above the lid (4) of the housing (1).

16. Device according to one of the preceding claims, **characterized in that** electrical connections (32, 33, 34) for picking up and/or delivering current are provided, wherein the device constitutes a mobile power supply, and the battery (2) is a rechargeable battery.

## Revendications

1. Dispositif comprenant un boîtier (1) et comprenant une batterie (2), le boîtier (1) possédant un fond (6) et des parois latérales (7), la batterie (2) possédant une plaque de couvercle (13) pourvue d'un élément de maintien (5, 11, 12), et l'élément de maintien (5, 11, 12) de la plaque de couvercle (13) étant relié au boîtier (1) de telle sorte que la batterie (2) est fixée suspendue dans le boîtier (1), un fond (8) de la batterie (2) présentant un écart par rapport au fond (6) du boîtier (1) et des parois latérales de la batterie (2) présentant un écart par rapport aux parois latérales (7) du boîtier (1), le boîtier (1) étant fermé avec le couvercle (4) qui repose sur les parois latérales (7) du boîtier (1), et le couvercle (4) possédant un cadre de couvercle (28) circonférentiel qui est subdivisé en deux zones de couvercle (71, 44) séparées de telle sorte que la première zone de couvercle (71) est conçue pour accueillir au moins un composant électrique et la deuxième zone de couvercle (44) est conçue pour accueillir au moins un élément de refroidissement (21), **caractérisé en ce que** la première zone de couvercle (71) possède une garniture d'étanchéité (22) circonférentielle qui est disposée entre la plaque de couvercle (13) de la batterie (2) et une zone de bordure (42) circonférentielle de la première zone de couvercle (71) .

2. Dispositif selon la revendication 1, **caractérisé en ce que** le boîtier (1) est constitué de matière plastique.

3. Dispositif selon l'une des revendications précédentes, **caractérisé en ce qu'**un élément de maintien (11, 12) est formé en tant qu'élément de maintien dans une zone supérieure de la batterie (2), sur au moins deux côtés de la batterie (2), l'élément de maintien (11, 12) étant fixé à au moins deux parois latérales (7) du boîtier (1) .

4. Dispositif selon l'une des revendications précédentes, **caractérisé en ce que** le fond (6) du boîtier (1) et les parois latérales (7) forment un boîtier (1) fermé en forme de pot pourvu d'une zone de couvercle ouverte, les parois latérales (7) possédant un bord de couvercle (15) circonférentiel, le bord de couvercle (15) entourant la zone de couvercle, l'élément de maintien (11, 12) de la batterie (2) reposant sur le bord de couvercle (15) du boîtier (1).

5. Dispositif selon l'une des revendications précédentes, **caractérisé en ce que** la plaque de couvercle (13) est fixée sur la batterie (2) et recouvre un côté supérieur de la batterie (2), des zones de bordure extérieures (12) de la plaque de couvercle (13) faisant saillie latéralement au-dessus de la batterie (2) au moins dans certaines portions et représentant l'élément de maintien (12) de la batterie (2).

6. Dispositif selon les revendications 4 et 5, **caractérisé en ce que** les zones de bordure extérieures (12) de la plaque de couvercle (13) forment un bord* de maintien (12) circonférentiel fermé, le bord de maintien (12) étant disposé au-dessus du bord de couvercle (15), une garniture d'étanchéité (14) qui suit un tracé autour de la zone du couvercle étant disposée entre le bord de maintien (12) et le bord de couvercle (15), de sorte qu'un espace intermédiaire entre le bord de maintien (12) et le bord de couvercle (15) est rendu étanche contre la pénétration d'humidité.

7. Dispositif selon la revendication 6, **caractérisé en ce qu'**au moins une soupape d'équilibrage de pression (54) se trouve dans la plaque de couvercle (13).

8. Dispositif selon l'une des revendications précédentes 5 à 7, **caractérisé en ce que** la plaque de couvercle (13) possède au moins un élément de refroidissement (21) sur un côté supérieur à l'opposé de la batterie (2), la plaque de couvercle (13) étant notamment constituée d'un matériau thermoconducteur tel qu'un métal.

9. Dispositif selon l'une des revendications précédentes 5 à 8, **caractérisé en ce que** la plaque de couvercle (13) possède une traversée (27) pour des lignes électriques, la traversée (27) étant notamment réalisée étanche à la poussière et/ou à l'humidité.

10. Dispositif selon la revendication 1, **caractérisé en ce que** chaque zone de couvercle (71, 44) possède un bossage vers le haut, un fond de couvercle (31) se trouvant entre les bossages (29, 30), le fond de couvercle (31) étant disposé approximativement à la même hauteur que le cadre de couvercle (28).

11. Dispositif selon la revendication 10, **caractérisé en ce que** la première zone de couvercle (71) est rendue étanche par rapport à la deuxième zone de couvercle (44), la deuxième zone de couvercle (44) possédant au moins une ouverture de ventilation (38).

12. Dispositif selon la revendication 11, **caractérisé en ce qu'**un ventilateur (23) est disposé dans la deuxième zone de couvercle (44).

13. Dispositif selon l'une des revendications précédentes, **caractérisé en ce que** la batterie (2) possède un circuit électronique (65, 66) sur un côté supérieur et/ou sur une surface latérale, le circuit (65, 66) possédant notamment une commande de charge/décharge et/ou un circuit de surveillance pour la batterie (2).

14. Dispositif selon l'une des revendications précédentes, **caractérisé en ce que** la batterie (2), notamment avec le circuit électronique (65, 66), est disposée dans un boîtier de batterie (3) qui est relié à l'élément de maintien (5, 11, 12) et un fond (70) du boîtier de batterie (3) possède un écart par rapport au fond (8) du boîtier (1).

15. Dispositif selon l'une des revendications précédentes, **caractérisé en ce que** le fond (8) du boîtier (1) repose sur un cadre porteur (47), le cadre porteur (47) possédant au moins un élément de fond (48) et quatre éléments latéraux (50), le fond (8) reposant sur l'élément de fond (48) et les quatre éléments latéraux (50) étant disposés dans quatre zones de coin du boîtier (1), et les quatre éléments latéraux (50) étant menés du fond jusqu'au-dessus du couvercle (4) du boîtier (1).

16. Dispositif selon l'une des revendications précédentes, **caractérisé en ce que** des bornes électriques (32, 33, 34) destinées à recevoir et/ou à délivrer du courant sont présentes, le dispositif représentant une alimentation électrique mobile et la batterie (2) représentant une batterie rechargeable.
